# EUROPÄISCHE PATENTSCHRIFT

(11) **EP 0 734 672 B1**
(45) Veröffentlichungstag und Bekanntmachung des Hinweises auf die Patenterteilung: **10.01.2001**
(21) Anmeldenummer: 96105437.6
(22) Anmeldetag: 30.09.1993
(51) Int. Cl.: A47J 27/12

(54) **Set von ineinander stapelbaren topfartigen Bestandteilen**
Set of stackable pot-like devices
Ensemble de récipients empilables

(30) Priorität: 26.04.1993 DE 4313550; 10.09.1993 DE 4330653
(43) Veröffentlichungstag der Anmeldung: 02.10.1996
(62) Teilanmeldung aus: 93920850.0
(73) Patentinhaber: HEINRICH BERNDES GMBH & CO. KG, D-59757 Arnsberg (DE)
(72) Erfinder: Klopsteck, Gerd Dipl.-Wirschafts-Ing., 59757 Arnsberg (DE)
(74) Vertreter: Heldt, Gert, Dr. Dipl.-Ing.

(56) Entgegenhaltungen:
- EP-A- 0 297 412
- EP-A- 0 511 938
- DE-A- 3 631 372
- FR-A- 1 477 770
- FR-A- 2 378 486

## Beschreibung

Set von ineinander stapelbaren topfartigen Geschirrteilen unterschiedlicher Größe, wie Kochtöpfe von denen zumindestens einige mit Griffen versehen sind und deren Druchmesser von in einem Stapel untersten Geschirrteil zum im Stapel obersten Geschirrteil derart abnimmt, daß ein kleineres Geschirrteil mit seinen Griffen auf dem oberen Rand eines größeren Geschirrteils aufliegt und in einer vom oberen Rand umgebenen Öffnung des größeren Geschirrteils im Bereich von Führungen geführt ist, die an den Griffen ausgebildet sind.

Im Haushalt ist es üblich, daß die Hausfrau Kochtöpfe, Schüsseln und anderes Geschirr unterschiedlicher Größe im Schrank ineinandergestapelt aufbewahrt, um so Schrankraum zu sparen. Die Größe und Anzahl der in solchen Stapeln enthaltenen Töpfe ist aber mehr oder weniger zufällig, und die Stapel sind häufig instabil, so daß ein Abkippen eines zu kleinen Topfs in einen größeren Topf auftreten kann, was bei Töpfen mit empfindlicher, z.B. polierter oder mit einem Dekor versehener Oberfläche, zu Kratzern oder Schrammen führen kann. Auch im Innern der Töpfe vorgesehene Beschichtungen, z.B. Antihaftversiegelungen aus Polytetrafluorethylen (PTFE) können beschädigt werden.Insbesondere auch aus diesem Grund, d.h. zur Vermeidung einer Beschädigung der Oberfläche oder von Beschichtungen werden Töpfe von den Herstellern einzeln verpackt und dann, zu größeren Gebinden zusammengestellt, zu den Händlern versandt, was im Vergleich zum an sich denkbaren Versand von ineinander gestapelten Töpfen zwangsläufig größeren Transportraum und somit höhere Transportkosten erfordert.

Aus der EP-A-511 938 ist ein Stapel-Topfset bekannt, bei dem sich die Töpfe mittels ihrer Griffe auf dem oberen Rand des unten liegenden Topfs abstützen. Da sie sich jedoch in einer horizontalen Ebene relativ zueinander verschieben können, ist die Beschädigung der Oberfläche oder einer gegebenenfalls vorgesehenen Beschichtung auch bei diesem Topfset im gestapelten Zustand nicht ausgeschlossen.

Darüber hinaus ist ein Stapel-Topfset bekannt geworden, dessen einzelne Töpfe mit Griffen versehen sind, auf denen sich der jeweils kleinere Topf auf einem oberen Rand eines im Stapel nachfolgenden größeren Topfes abstützt. Diese Griffe sind jeweils mit Zentrierungen versehen, an denen der jeweils kleinere Topf in der Mündung des nachfolgenden größeren Topfes so geführt wird, daß Verschiebungen des kleineren Topfes innerhalb der Mündung des größeren Topfes vermieden werden. Wird jedoch der jeweils größere Topf dem Stapel entnommen, so entfällt jegliche Führung des kleineren Topfes in der Mündung des nächst größeren Topfes. Der kleinere Topf bewegt sich in dem nächstfolgenden größeren Topf in beliebiger Weise, wenn entweder der gesamte Stapel-Topfset transportiert wird, oder der kleinere Topf in den Stapel zurückgeführt wird, obgleich der nächstfolgende größere Topf noch fehlt.

Der Erfindung liegt die Aufgabe zugrunde, einen Stapel-Topfset zu schaffen, bei dem eine Führung des jeweils kleineren Topfes auch dann noch gewährleistet ist, wenn der nächstfolgende größere Topf des Stapels diesem entnommen ist.

Diese Aufgabe wird erfindungsgemäß nunmehr dadurch gelöst, daß einander an einem Geschirrteil zugeordnete Griffe jeweils mehr als zwei Zentrierflächen aufweisen, von denen jede von der entsprechenden Zentrierfläche des zugeordneten Griffs einen das kleinere Geschirrteil in der Öffnung eines größeren Geschirrteils zentrierenden Abstand einhält und jeder Abstand zwischen Zentrierflächen einander zugeordneter Griffe als eine Zentrierung des kleineren Geschirrteils in jeweils einer Öffnung von einem im Stapel dem kleineren Geschirrteil folgenden größeren Geschirrteil ausgebildet ist.

Der auf diese Weise gestaltete Topfset besitzt den großen Vorteil, daß die einzelnen Töpfe auch dann noch ineinander zentriert sind, wenn ein einzelner Topf dem Stapel entnommen ist. Der jeweils in den Stapel zurückgeführte kleinere Topf wird im Zweifel auch auf dem im Stapel übernächsten Topf geführt, so daß ein Anschlagen der Töpfe mit Sicherheit auch dann vermieden wird, wenn der Topfset nicht vollständig sämtliche Töpfe aufweist, die zum Set gehören. Gerade dieser Einsatzfall ist für die praktische Küchenwirklichkeit von großer Bedeutung, da im Regelfall nicht alle Töpfe des Sets in Benutzung sind, sondern nur einige. In diesem Falle wird nur der eine oder andere Topf dem Set entnommen. Trotzdem wird mit den mehrfachen Zentrierflächen erreicht, daß der jeweils kleinere Topf ggf. auch in einem der übernächsten im Stapel untergebrachten Töpfe geführt wird.

Gemäß einer bevorzugten Ausführungsform der Erfindung sind die Zentrierflächen zweier einander zugeordneter Griffe bezüglich des einzelnen Griffs zueinander höhenversetzt und auf diese Weise jeweils einem Querschnitt von Öffnungen angepaßt, die im Stapel nachfolgenden größeren Geschirrteilen zugeordnet sind. Durch diese Versetzung der Zentrierflächen bezüglich ihrer Höhe, die sie von einer Wandung der Kochtöpfe einhalten, können die Zentrierflächen einander zugeordneter Griffe bezüglich ihrer jeweiligen Töpfe so angeordnet werden, daß die Töpfe in den Öffnungen der im Stapel angeordneten größeren Töpfe problemlos angeordnet werden können. Bevorzugt sind die einer kleineren Öffnung angepaßten Zentrierflächen in geringerer Höhe in bezug auf einen das jeweilige Geschirrteil abschließenden Boden angeordnet, als die einer größeren Öffnung entsprechenden Zentrierflächen. Auf diese Weise ist dafür Sorge getragen, daß der kleinere Topf in den ihn aufnehmenden größeren Topf um so weiter einsinkt, je größer dessen Öffnung ist, in die der kleinere Topf eingesetzt wird.

Gemäß einer weiteren bevorzugten Ausführungsform der Erfindung sind die Zentrierflächen mit einem auf dem oberen Rand aufliegenden Radius versehen. Durch diese Anpassung der Zentrierflächen an den oberen Rand der Kochtöpfe bzw. Geschirrteile ist dafür gesorgt, daß die Zentrierflächen einen festen Sitz auf dem jeweiligen Rand einnehmen, so daß der jeweilige kleinere Topf im größeren Topf fest geführt ist.

Zweckmäßigerweise ist der an einem grifflosen Geschirrteil ausgebildete Rand derart nach außen gebogen, daß sein Durchmesser größer als der lichte Innendurchmesser des im Stapel darunter vorgesehenen Geschirrteils ist. Durch diese Ausbildung des am grifflosen Geschirrteil ausgebildeten Randes ist dafür gesorgt, daß dieser mit seiner großen Auswölbung fest auf dem mit einer kleinen Auswölbung versehenen Rand eines Kochtopfes geführt ist. Auf diese Weise ruhen die grifflosen Geschirrteile gut geführt auf den Rändern der mit Griffen versehenen Kochtöpfe.

Diese Führung wird zweckmäßigerweise dadurch verbessert, daß der obere freie Rand eines grifflosen Geschirrteils einen nach unten in Richtung auf den Boden des Geschirrteils umgekanteten streifenförmigen Randabschnitt aufweist. Dieser Randabschnitt zentriert den Rand des grifflosen Geschirrteils auf dem kleineren Rand eines mit Griff versehenen Kochtopfes.

Weitere Einzelheiten der Erfindung ergeben sich aus der nachfolgend ausführlichen Beschreibung und den beigefügten Zeichnungen, in denen eine bevorzugte Ausführungsform der Erfindung beispielsweise dargestellt ist.

In den Zeichnungen zeigen:
- Figur 1 :: eine teilweise geschnittene Ansicht eines Sets von Geschirrteilen,
- Figur 2 - 10:: jeweils teilweise geschnittene Ansichten von einzelnen Geschirrteilen des in Figur 1 dargestellten Sets,
- Figur 11:: eine perspektivische Ansicht eines Griffes und
- Figur 12:: einen Schnitt durch einen Griff entsprechend der Schnittlinie XII-XII in Figur 11.

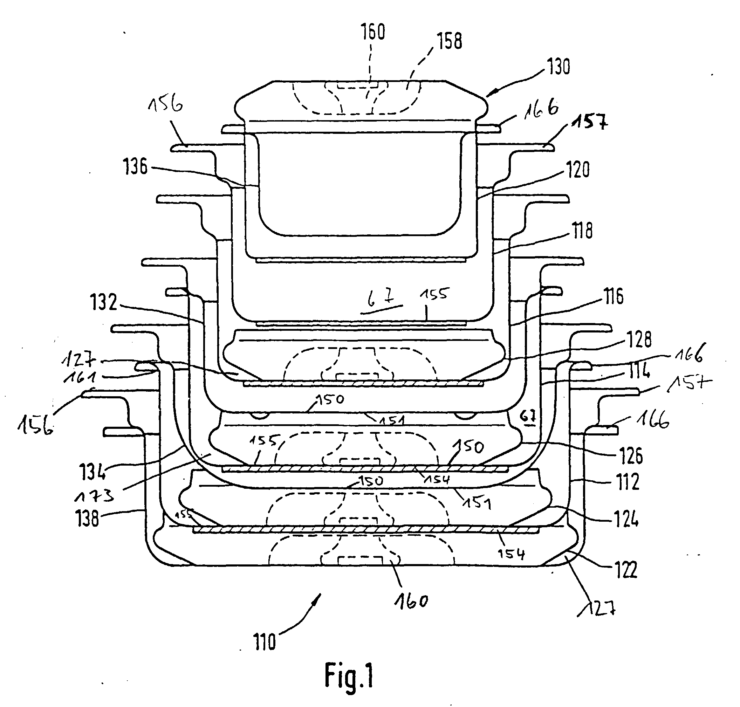

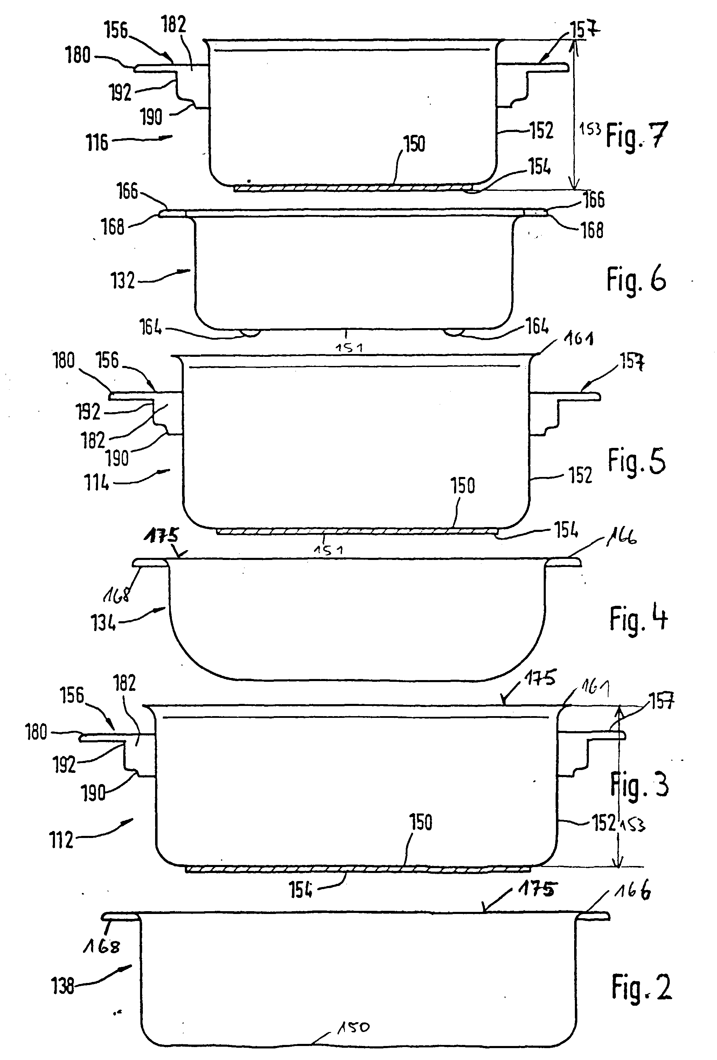

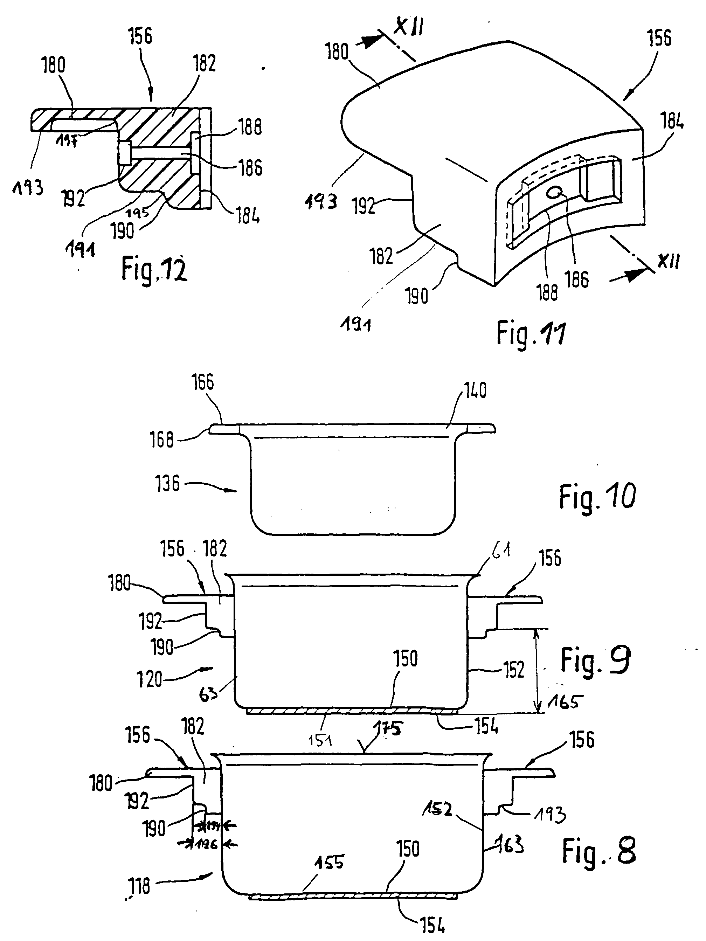

In Figur 1 ist ein Set 10 von Geschirrteilen dargestellt, das insgesamt fünf in den Figuren 3, 5, 7, 8 und 9 dargestellte Kochtöpfe 112, 114, 116, 118, 120 unterschiedlicher Größe mit zugehörigen Deckeln 122, 124, 126, 128, 130 umfaßt. Außerdem sind in dem Set 10 angeordnet ein bodenseitig gelochter Dünster 132 (Figur 3), eine Schüssel 134 (Figur 4), ein Wasserbad-Einsatz 136 (Figur 10) und eine Auf lauf form 138 (Figur 2). Der Dünster 132, die Schüssel 134, der Wasserbad-Einsatz 136 und die Auflaufform 138 besitzen keine Griffe.

Die Kochtöpfe 112, 114, 116, 118, 120 besitzen einen zylindrischen, an einer Seite durch einen Boden 150 geschlossenen Topfkörper 152. Der Boden 150 weist eine vom Topfkörper 152 wegweisende äußere Oberfläche 151 sowie eine dieser gegenüberliegende innere Oberfläche 155 auf. Auf der äußeren Oberfläche 151 ist eine Platte 154 aus gut wärmeleitendem und wärmespeicherndem Metall befestigt.

Der Topfkörper 152 besitzt einen oberen Rand 161, der nach außen umgebogen ist, um das Einführen des jeweils zugehörigen Deckels 122, 124, 126, 128, 130 zu erleichtern. Auf diesem Rand 161 liegt der Deckel 122, 124, 126, 128, 130 im geschlossenen Zustand des Kochtopfes 112, 114, 116, 118, 120 auf. An einer dem Topfkörper 152 begrenzenden Wandung 163 sind Handgriffe 156, 157 vorzugsweise diametral befestigt.

Die Kochtöpfe 112, 114, 116, 118, 120 besitzen unterschiedliche Durchmesser. Sie können auch verschiedene Höhe 153 aufweisen. Die Handgriffe 156, 157 sind mit einem Abstand 165 vom Boden 150 an der Wandung 163 befestigt.

Der jeweils kleinere Kochtopf 120, 118, 116, 114, 112 stützt sich mit seinem jeweiligen Handgriff 156, 157 auf einem größeren Geschirrteil 112, 114, 116, 118, 120, 132, 134, 138 auf dessen oberen Rand 161, 166 ab. Dabei sind die Handgriffe 156, 157 an der Wandung 163 in der Weise befestigt, daß zwischen der äußeren Oberfläche 151 eines am kleineren Geschirrteil 120, 118, 116, 114, 112; 136, 134, 132 vorgesehenen Bodens 150 und der inneren Oberfläche 155 eines dem benachbarten Geschirrteil 112, 114, 116, 118, 120; 132, 134, 138 zugeordneten Bodens 150 ein Abstand 127 vorgesehen ist, dessen Höhe so bemessen ist, daß mindestens ein Deckel 122, 124, 126, 128, 130, möglicherweise jedoch auch weitere Geschirrteile 132, 134 in ihm Platz finden.

Eine genaue Führung der Kochtöpfe 112, 114, 116, 118, 120 im jeweils benachbarten größeren Kochtopf 118, 116, 114, 112 bzw. einem anderen benachbarten Geschirrteil 132, 134, 138 erfolgt mit Hilfe der Handgriffe 156, 157. Der in den Figuren 11 und 12 dargestellte Handgriff 156 weist eine als Griffplatte geformte Handhabe 180 auf, die fest mit einem Befestigungskörper 182 verbunden ist, von dem sie in eine von der Wandung 152 wegweisende Richtung vorsteht. Dieser Befestigungskörper 182 ist an seiner der Wandung 163 zugewandten Seite mit einer Befestigungsfläche 184 versehen, die eine der zylindrischen Form des Topfkörpers 152 angepaßte Krümmung aufweist. Mit dieser Befestigungsfläche 184 liegt der Griff 156 fest auf der Wandung 163 des Topfkörpers 152 auf und wird mit einer nicht dargestellten Befestigungsschraube an dem Topfkörper 152 befestigt. Diese Schraube ragt durch eine im Befestigungskörper 182 vorgesehene Befestigungsbohrung 186 hindurch und wird mit einem am Topfkörper an einer nicht dargestellten Lasche vorgesehenen Gewinde verschraubt. Diese Lasche liegt in einer in die Befestigungsfläche 184 eingearbeiteten Vertiefung 188, so daß sie die feste Anlage der Befestigungsfläche 184 an der Wandung 163 nicht stört.

Der Befestigungskörper 182 ist an seiner der Befestigungsfläche 184 abgewandten Seite mit Führungen 190, 192 versehen, mit deren Hilfe der jeweils kleinere Kochtopf 120, 118, 116, 114, 112 in einer ihm zugewandten Öffnung 175 eines benachbarten Geschirrteils 112, 114, 116, 118, 120, 132, 134, 138 geführt wird.

Die Zentrierflächen 190, 192 sind in ihren jeweiligen Höhen 194, 196, die sie gegenüber der Wandung 163 des Topfkörpers 152 einhalten, gegeneinander versetzt. Die Zentrierfläche 192 hält einen größeren Abstand 196 von der Wandung 163 ein als die Zentrierfläche 190. Damit wird der Topfkörper 152 mit Hilfe der Zentrierfläche 192 in einer Öffnung 175 geführt, die einen größeren Durchmesser besitzt als eine zu einem kleineren Geschirrteil 120, 118, 116, 114, 112, 132, 134 gehörende Öffnung 175, der die Zentrierfläche 190 angepaßt ist.

Die Zentrierflächen 190, 192 besitzen zweckmäßigerweise über die Breite des gesamten Handgriffes 156, 157 eine Krümmung, die jeweils einem Querschnitt der jeweiligen Öffnung 175, in der eine Führung zustande kommen soll, angepaßt ist.
Es ist jedoch auch denkbar, die Zentrierflächen 190, 192 so auszubilden, daß sie lediglich punktuell oder entlang einer Berührungslinie in der für sie vorgesehenen Öffnung 175 anliegen. Darüber hinaus ist eine Gestaltung der Griffe 156, 157 denkbar, bei der mehr als zwei Zentrierflächen 190, 192 vorgesehen sind, so daß das jeweils mit einem solchen Handgriff 156,157 ausgerüstete Geschirrteil in Öffnungen 175 von mehr als zwei benachbarten größeren Geschirrteilen geführt wird.

Die Zentrierflächen 190, 192 sind mit unterschiedlichen Abständen 165 vom Topfboden 150 entfernt. Dabei besitzt die der kleineren Öffnung 175 angepaßte Zentrierfläche 190 einen kleineren Abstand 165 vom Topfboden 150 als die der größeren Öffnung 175 angepaßte Zentrierfläche 192.

Die Zentrierflächen 190, 192 münden jeweils ein in Auflageflächen 191, 193, auf denen die Handgriffe 156, 157 sich auf einem Rand 161, 166 eines benachbarten Geschirrteils 118, 116, 114, 112; 132, 134, 138 abstützt. Diese Auflageflächen 191, 193 sind bei einem auf horizontaler Ebene stehenden Kochtopf 112, 114, 116 118, 120 horizontal ausgerichtet. Sie münden zweckmäßigerweise in die Zentrierflächen 190, 192 mit Radien 195, 197 ein, die den jeweiligen Radien eines Randes 161, 166 entsprechen, auf dem sich der mit dem Handgriff 156, 157 versehene Kochtopf 112, 114, 116, 118, 120 abstützt. Dabei ist der Radius 195, 197 kleiner gewählt, wenn eine Abstützung auf einem oberen Rand 161 eines Kochtopfes 112, 114, 116, 118, 120 stattfindet und größer gewählt, wenn die Abstützung auf einem Rand 166 eines grifflosen Geschirrteils 132, 134, 138 stattfindet. Diese grifflosen Geschirrteile 132, 134, 136, 138 besitzen einen gegenüber dem Rand 161 eines Kochtopfes 112, 114, 116, 118, 120 vergrößerten Radius, der eine gute Führung auf dem kleinen Rand 161 verschiedener Kochtöpfe 112, 114, 116, 118, 120 aufweist. Darüber hinaus ist der Rand 166 des grifflosen Geschirrteils 132, 134, 136, 138 auch noch mit einem Randbereich 168 versehen, der in Richtung auf einen Boden 150 des jeweiligen Geschirrteils 132, 134, 136, 138 überragt und für eine besonders gute Führung des jeweiligen Geschirrteils 132, 134, 136, 138 auf dem Rand 161 eines Kochtopfes 112, 114, 116, 118, 120 sorgt.

Beim Zusammensetzen eines Sets 10 werden die jeweils kleineren Geschirrteile 120, 118, 116, 114, 112; 136, 132, 134 in die größeren Geschirrteile 120, 118, 116, 114, 112; 132, 134, 138 eingesetzt, und zwar so, daß in die Auflaufform 138 als größtes Geschirrteil der größte Kochtopf 112 eingesetzt wird, in den die nachfolgenden Geschirrteile nach der Größe ihrer Durchmesser sortiert eingehängt werden. Dabei sind die grifflosen Geschirrteile 132, 134, 136 jeweils zwischen zwei mit Griffen 156, 157 versehenen Kochtöpfen 112, 114, 116, 118, 120 angeordnet. Darüber hinaus liegen auf den Böden 150 der jeweils größeren Geschirrteile auch die Deckel 122, 124, 126, 128, 130 der kleineren Geschirrteile 120, 118, 116, 114, 112.

In diesem vollständigen Stapel stützen sich die Handgriffe 156, 157 mit ihren Auflageflächen 191 auf den Rändern 161, 166 der benachbarten Geschirrteile 112, 114, 116, 118; 132, 134, 138 ab. Dabei greifen die Zentrierflächen 190 in die Öffnungen 175 der unmittelbar benachbarten Geschirrteile 118, 116, 114, 112; 132, 134, 138 ein und führen das kleinere Geschirrteil 120, 118, 116, 114, 112; in dieser Öffnung 175.

Wird eines der Geschirrteile, beispielsweise der Dünster 132 dem Stapel entnommen, so stützt sich das unmittelbar benachbarte Geschirrteil, beispielsweise der Kochtopf 116, der sich mit seinen Handgriffen 156, 157 zuvor auf dem Rand 166 des Dünsters 132 mit der Auflagefläche 191 abgestützt hatte, nunmehr mit der Auflagefläche 193 auf dem oberen Rand 161 des benachbarten Kochtopfes 114 ab, in den zuvor der Dünster 132 eingesetzt war. Dabei kommt die Zentrierfläche 192 in der Öffnung 175 des Kochtopfes 114 zur Anlage.

In entsprechender Weise kann jedes der im Stapel vorgesehenen Geschirrteile 112, 114, 116, 118, 120; 132, 134, 136 entnommen werden, ohne daß nach Entnahme dieses Geschirrteils das jeweils folgende kleinere Geschirrteil führungslos in dem dem entnommenen Geschirrteil benachbarte größeren Geschirrteil hängt. Durch Aufnahme weiterer Zentrierflächen 190, 192 in die Handgriffe 196, 197 wird bewirkt, daß auch weitere Geschirrteile 112, 114, 116, 118, 120; 132, 134, 136 dem Stapel entnommen werden können und trotzdem eine Führung des jeweils kleineren Geschirrteils in dem im Stapel verbliebenen Geschirrteil zustande kommt.

## Patentansprüche

1. Set von ineinander stapelbaren topfartigen Geschirrteilen (12, 14, 16, 18, 20; 112, 114, 116, 118, 120; 32, 34, 36; 132, 134, 136, 138) unterschiedlicher Größe, wie Kochtöpfe (12, 14, 16, 18, 20; 112, 114, 116, 118, 120) von denen zumindestens einige mit Griffen (56, 57; 156, 157) versehen sind und deren Durchmesser von in einem Stapel untersten Geschirrteil (12, 138) zum im Stapel obersten Geschirrteil (36; 136) derart abnimmt, daß ein kleineres Geschirrteil (14, 16, 18, 20; 112, 114, 116, 120; 32, 34, 36; 132, 134, 136) mit seinen Griffen (56, 57; 156, 157) auf dem oberen Rand (61, 161) eines größeren Geschirrteils (34, 32; 138, 134, 132; 12, 14, 16, 18; 112, 114, 116, 118) aufliegt und in einer vom oberen Rand (61, 161) umgebenen Öffnung des größeren Geschirrteils (34, 32; 138, 134, 132; 12, 14, 16, 18; 112, 114, 116, 118) im Bereich von Zentrierflächen (190, 192) geführt ist, die an den Griffen (56, 57; 156, 157) ausgebildet sind, dadurch gekennzeichnet, daß einander an einem Geschirrteil (12, 14, 16, 18, 20; 112, 114, 116, 118, 120) zugeordnete Griffe (56, 57; 156, 157) jeweils mehr als zwei Zentrierflächen (190, 192) aufweisen, von denen jede von der entsprechenden Zentrierfläche (190, 192) des zugeordneten Griffs (56, 57; 156, 157) einen das kleinere Geschirrteil (120, 118, 116, 114, 112) in der Öffnung eines größeren Geschirrteils (18, 16, 14, 12; 34, 32; 118, 116, 114, 112; 132, 134, 138) zentrierenden Abstand einhält und jeder Abstand zwischen Zentrierflächen (190, 192) einander zugeordneter Griffe ( 56, 57; 156, 157) als eine Zentrierung des kleineren Geschirrteils (20, 18, 16, 14; 36, 34, 32; 120, 118, 116, 114, 112; 136, 132, 134) in jeweils einer Öffnung von einem im Stapel dem kleineren Geschirrteil (20, 18, 16, 14; 36, 34, 32; 120, 118, 116, 114, 112; 136, 132, 134) folgenden größeren Geschirrteil (20, 18, 16, 14, 12; 34, 32; 120, 118, 116, 114, 112; 132, 134, 138) ausgebildet ist.

2. Set nach Anspruch 1, dadurch gekennzeichnet, daß die Zentrierflächen (190, 192) zweier einander zugeordneter Griffe (56, 57; 156, 157) bezüglich des einzelnen Griffs zueinander höhenversetzt sind und auf diese Weise jeweils einem Querschnitt von Öffnungen angepaßt sind, die im Stapel nachfolgenden größeren Geschirrteilen (20, 18, 16, 14, 12; 34, 32; 120, 118, 116, 114, 112; 132, 134, 138) zugeordnet sind.

3. Set nach Anspruch 1 oder 2, dadurch gekennzeichnet, daß die einer kleineren Öffnung angepaßten Zentralflächen (190) in geringerer Höhe in bezug auf einen das jeweilige Geschirrteil (20, 18, 16, 14, 12; 120, 118, 116, 114, 112) abschließenden Boden angeordnet sind, als die einer größeren Öffnung entsprechenden Zentrierflächen (192).

4. Set nach einem der Ansprüche 1 bis 3, dadurch gekennzeichnet, daß die Zentrierflächen (190, 192) mit einem auf dem oberen Rand (61, 161) aufliegenden Radius (193) versehen sind.

5. Set nach Anspruch 4, dadurch gekennzeichnet, daß der Radius (193) einem Rand (61, 161) entsprechend ausgebildet ist, der an einem als Kochtopf ausgebildeten Geschirrteil (12, 14, 16, 18, 20; 112, 114, 116, 118, 120) ausgebildet ist.

6. Set nach einem der Ansprüche 4 oder 5, dadurch gekennzeichnet, daß der Radius (193) einem Rand (61, 161) entsprechend ausgebildet ist, der an einem in einen Kochtopf (20, 14, 12; 120, 114, 112) eingefügten grifflosen Geschirrteil (36, 34, 32; 136, 132, 134) ausgebildet ist.

7. Set nach Anspruch 6, dadurch gekennzeichnet, daß der an einem grifflosen Geschirrteil (36, 34, 32; 136, 132, 134, 138) ausgebildete Rand derart nach außen umgebogen ist, daß sein Durchmesser größer als der lichte Innendurchmesser des im Stapel darunter vorgesehenen Geschirrteils (20, 14, 12; 120, 114, 112) ist.

8. Set nach Anspruch 7, dadurch gekennzeichnet, daß der obere Rand (66) eines grifflosen Geschirrteils (36, 34, 32; 136, 132, 134) einen nach unten in Richtung auf seinen Boden (50, 150) umgekanteten streifenförmigen Randabschnitt (68; 168) aufweist.

## Claims

1. A set of pot-like kitchenware items (12, 14, 16, 18, 20; 112, 114, 116, 118, 120; 32, 34, 36; 132, 134, 136, 138) of different sizes such as cooking pots (12, 14, 16, 18, 20; 112, 114, 116, 118, 120;) which can be stacked one within the other and of which at least some are provided with handles (56, 57; 156, 157) and whose diameter decreases from the kitchenware item (12, 138) which is lowermost in a stack to the kitchenware item (36; 136) which is uppermost in the stack in such a way that a smaller kitchenware item (14, 16, 18, 20; 112, 114, 116, 118, 120; 32. 34. 36; 132, 134, 136,) rests with its handles (56, 57; 156, 157) on the upper edge (61, 161) of a larger kitchenware item (34, 32; 138, 134, 132; 12, 14, 16, 18; 112, 114, 116, 118) and is guided in an opening, surrounded by the upper edge (61, 161), of the larger kitchenware item (34, 32; 138, 134, 132; 12, 14, 16, 18; 112, 114, 116, 118) in the region of centering surfaces (190, 192) which are provided at the handles (56, 57; 156, 157), characterised in that handles (56, 57; 156, 157) associated with each other on a kitchenware item (12, 14, 16, 18, 20; 112, 114, 116, 118, 120) each have more then two centering surfaces (190, 192), each of which maintains from the corresponding centering surface (190, 192) of the associated handle (56, 57; 156, 157) a spacing which centres the smaller kitchenware item (120, 118, 116, 114, 112) in the opening of a larger kitchenware item (18, 16, 14, 12; 34, 32; 118, 116, 114, 112; 132, 134, 138) and each spacing between centering surfaces (190, 192) of mutually associated handles (56, 57; 156, 157) is in the form of a centering of the smaller kitchenware item (20, 18, 16, 14; 36, 34, 32; 120, 118, 116, 114, 112; 136, 132, 134) in a respective opening of a larger kitchenware item (20, 18, 16, 14, 12; 34, 32; 120, 118, 116, 114, 112; 132, 134, 138) which follows in the stack the smaller kitchenware item (20, 18, 16, 14; 36, 34, 32; 120, 118, 116, 114, 112; 136, 132, 134).

2. A set according to claim 1 characterised in that the centering surfaces (190, 192) of two mutually associated handles (56, 57; 156, 157) are displaced relative to each other in respect of height in relation to the individual handle and in that way are respectively adapted to a cross-section of openings which are associated with larger kitchenware items (20, 18, 16, 14, 12; 34, 32; 120, 118, 116, 114, 112; 132, 134, 138) which follow in the stack.

3. A set according to claim 1 or claim 2 characterised in that the centering surfaces (190) adapted to a smaller opening are arranged at a smaller height in relation to a bottom closing the respective kitchenware item (20, 18, 16, 14, 12; 120, 118, 116, 114, 112), than the centering surfaces (192) corresponding to a larger opening.

4. A set according to one of claims 1 to 3 characterised in that the centering surfaces (190, 192) are provided with a radius (193) which rests on the upper edge (61, 161).

5. A set according to claim 4 characterised in that the radius (193) is formed to correspond to an edge (61, 161) which is provided on a kitchenware item (12, 14, 16, 18, 20; 112, 114, 116, 118, 120) in the form of a cooking pot.

6. A set according to one of claims 4 and 5 characterised in that radius (193) is formed to correspond to an edge (61, 161) which is provided on a handle-less kitchenware item (36, 34, 32; 136, 132, 134) inserted into a cooking pot (20, 14, 12; 120, 114, 112).

7. A set according to claim 6 characterised in that the edge on a handle-less kitchenware item (36, 34, 32; 136, 132, 134, 138) is bent over outwardly in such a way that its diameter is larger than the internal diameter of the kitchenware item (20, 14, 12; 120, 114, 112) provided therebeneath in the stack.

8. A set according to claim 7 characterised in that the upper edge (66) of a handle-less kitchenware item (36, 34, 32; 136, 132, 134) has a strip-shaped edge portion (68; 168) which is turned over downwardly in a direction towards its bottom (50, 150).

## Revendications

1. Ensemble de pièces de vaisselle (12, 14, 16 ,18, 20; 112, 114, 116, 118, 120; 32, 34, 36; 132, 134, 136, 138) de différentes tailles, en forme de pot, empilables les unes dans les autres, telles que des casseroles ou des marmites (12, 14, 16 ,18, 20; 112, 114, 116, 118, 120), parmi lesquelles quelques unes au moins sont munies de poignées (56, 57 ; 156, 157) et dont le diamètre décroît depuis une pièce de vaisselle (12, 138) inférieure dans une pile jusqu'à une pièce de vaisselle (36, 136) supérieure dans ladite pile de manière telle qu'une pièce de vaisselle (14, 16 ,18, 20; 112, 114, 116,120; 32, 34, 36; 132, 134, 136) plus petite repose par ses poignées (56, 57; 156, 157) sur le bord supérieur (61, 161) d'une pièce de vaisselle (34, 32; 138, 134, 132; 12, 14, 16, 18; 112, 114, 116, 118) plus grande et soit guidée dans une ouverture de la pièce de vaisselle (34, 32; 138, 134, 132; 12, 14, 16, 18; 112,114,116, 118) plus grande entourée par le bord supérieur (61, 161), au niveau de surfaces de centrage (190, 192) qui sont aménagées sur les poignées (56, 57; 156, 157), caractérisé par le fait que des poignées (56, 57; 156, 157) mutuellement associées sur une pièce de vaisselle (12, 14, 16, 18, 20; 112, 114, 116, 118, 120) comportent chaque fois plus de deux surfaces de centrage (190, 192), qui maintiennent chacune une distance centrante de la pièce de vaisselle (120, 118, 116, 114, 112) plus petite dans l'ouverture d'une pièce de vaisselle (18, 16, 14, 12; 34, 32; 118, 116, 114, 112; 132, 134, 138) plus grande par rapport à la surface de centrage (190, 192) concernée de la poignée (56, 57; 156, 157) associée, et chaque distance entre des surfaces de centrage (190, 192) de poignées mutuellement associées (56, 57; 156; 157) est conformé en moyen de centrage de la pièce de vaisselle (20, 18, 16, 14; 36, 34, 32; 120, 118, 116, 114, 112; 136, 134, 132) plus petite dans une ouverture correspondante d'une pièce de vaisselle (20, 18, 16, 14, 12; 34, 32; 120, 118, 116, 114, 112; 132, 134, 138) plus grande consécutive d'une pièce de vaisselle (20, 18, 16, 14; 36 34, 32; 120, 118, 116, 114, 112; 132, 134, 138) plus petite dans la pile.

2. Ensemble selon la revendication 1, caractérisé par le fait que les surfaces de centrage (190, 192) de deux poignées (56, 57; 156, 157) mutuellement associées, en ce qui concerne la poignée isolée, sont mutuellement décalées en hauteur l'une par rapport à l'autre et sont ainsi adaptées à une section d'ouvertures associées à des pièces de vaisselle (20, 18, 16, 14, 12; 34, 32; 120, 118, 116, 114, 112; 132, 134, 138) plus grandes consécutives dans la pile.

3. Ensemble selon la revendication 1 ou 2, caractérisé par le fait que les surfaces centrales (190) adaptées à une ouverture plus petite, par rapport à un fond fermant la pièce de vaisselle concernée (20, 18, 16, 14, 12; 120, 118, 116, 114, 112), sont disposées à une hauteur plus faible que les surfaces de centrage (192) associées à une ouverture plus grande.

4. Ensemble selon une des revendications 1 à 3, caractérisé par le fait que les surfaces de centrage (190, 192) sont pourvues d'un rayon (193) qui repose sur le bord supérieur (61, 161).

5. Ensemble selon la revendication 4, caractérisé par le fait que le rayon (193) est conformé en fonction d'un bord (61, 161) aménagé sur une pièce de vaisselle (12, 14, 16, 18, 20; 112, 114, 116, 118, 120) se présentant sous la forme d'une casserole.

6. Ensemble selon une des revendications 4 ou 5, caractérisé par le fait que le rayon (193) est conformé en fonction d'un bord (61, 161) aménagé sur une pièce de vaisselle (36, 34, 32; 136, 134, 132) sans poignées insérée dans une casserole (20, 14, 12; 120, 114, 112).

7. Ensemble selon la revendication 6, caractérisé par le fait que le bord aménagé sur une pièce de vaisselle (36, 34, 32; 136, 134, 132) sans poignées est recourbé en direction de l'extérieur de manière telle que son diamètre soit supérieur au diamètre intérieur libre de la pièce de vaisselle (20, 14, 12; 120, 114, 112) prévue au-dessous dans la pile.

8. Ensemble selon la revendication 7, caractérisé par le fait que le bord supérieur (66) d'une pièce de vaisselle (36, 34, 32; 136, 132, 134) sans poignées comporte une partie de bord (68, 168) en forme de bande repliée vers le bas en direction du fond (50; 150).
